# EUROPÄISCHE PATENTSCHRIFT

(11) **EP 0 590 310 B1**
(45) Veröffentlichungstag und Bekanntmachung des Hinweises auf die Patenterteilung: **24.01.1996**
(21) Anmeldenummer: 93113623.8
(22) Anmeldetag: 26.08.1993
(51) Int. Cl.: F02C 7/20

(54) **Gasturbine mit angeflanschtem Abgasgehäuse**
Gas turbine with flanged exhaust casing
Turbine à gaz avec carter d'échappement bridé

(30) Priorität: 26.09.1992 DE 4232385
(43) Veröffentlichungstag der Anmeldung: 06.04.1994
(73) Patentinhaber: ASEA BROWN BOVERI AG, CH-5401 Baden (CH)
(72) Erfinder: Matyscak, Kamil, D-79777 Brenden (DE); Schmid, Traugott, CH-5430 Wettingen (CH)
(74) Vertreter: Klein, Ernest

(56) Entgegenhaltungen:
- DE-A- 2 423 913
- US-A- 3 628 884

## Beschreibung

### Technisches Gebiet

Die Erfindung betrifft eine Gasturbine mit einem in einem Turbinengehäuse koaxial eingehängten Schaufelträger für die Leitschaufeln, wobei sowohl das Turbinengehäuse als auch der Schaufelträger mit einer horizontalen Trennnebene versehen sind, in welcher ihre jeweils oberen und unteren Hälften miteinander verschraubt sind, und wobei sich stromabwärts der Austrittslaufschaufeln ein Abgasgehäuse anschliesst, dessen Begrenzungswände im wesentlichen aus einem nabenseitigen ringförmigen Innenteil und einem ringförmigen Aussenteil bestehen, welche einen Diffusor begrenzen, und wobei das Aussenteil über einen Ringflansch mit einem Ringflansch des Turbinengehäuses gasdicht verbunden ist. Eine derartige Gasturbine ist z.B. aus DE-A-2423913 zu entnehmen.

### Stand der Technik

Im instationären Betrieb, wie er bei Kraftwerks-Gasturbinen zur Spitzenlastdeckung häufig vorkommt, treten an den Gehäusen Wärmespannungen und Differenzdehnungen auf, die zu Deformationen an den Gehäusen und Spieländerungen zwischen Gehäuse und Läufer führen und die auch die Wellenlagerung beenflussen können. Es kann dann zu Beschädigungen der Lager und Stopfbüchsen sowie zu Schaufelhavarien kommen. Bei modernen Maschinen ist der an die Beschaufelung anschliessende Diffusor nicht mehr selbst am Fundament abgestützt, sondern er ist in das Abgasgehäuse integriert, welches seinerseits am Turbinengehäuse der Turbomaschine angeflanscht ist.

Selbst wenn man somit nur Zugang zum Brennkammerbereich haben will, muss in der Regel die Maschine mitsamt Abgaskanal abgedeckt werden.

### Darstellung der Erfindung

Die Erfindung versucht diesen Nachteil zu vermeiden und bei einer Maschine der eingangs genannten Art eine Massnahme zu schaffen, mit der das teilweise Abdecken der Maschine ermöglicht wird.

Erfindungsgemäss wird dies dadurch erreicht, dass zwischen den Ringflanschen ein zweiteiliger Trennring mit mindestens einer konisch verlaufenden Stirnfläche angeordnet ist.

Dabei ist es besonders zweckmässig, wenn der Winkel der konisch verlaufenden Stirnfläche selbsthemmend ausgebildet ist. Beim Anziehen der üblichen Flanschverschraubung wird durch die Selbsthemmung ein radiales Herausdrücken des Halbringes vermieden.

Kurze Beschreibung der Zeichnung

In der Zeichnung ist ein Ausführungsbeispiel der Erfindung anhand einer einwelligen axialdurchströmten Gasturbine dargestellt.

Es zeigen:
- Fig. 1: einen Teillängsschnitt der Gasturbine;
- Fig. 2: eine vergrösserte Ansicht des Details X in Fig. 1.

Es sind nur die für das Verständnis der Erfindung wesentlichen Elemente gezeigt. Nicht dargestellt sind von der Anlage beispielsweise der Verdichterteil, die Brennkammer sowie das vollständige Abgasrohr und der Kamin. Die Strömungsrichtung des Arbeitsmittels ist mit Pfeilen bezeichnet.

### Weg zur Ausführung der Erfindung

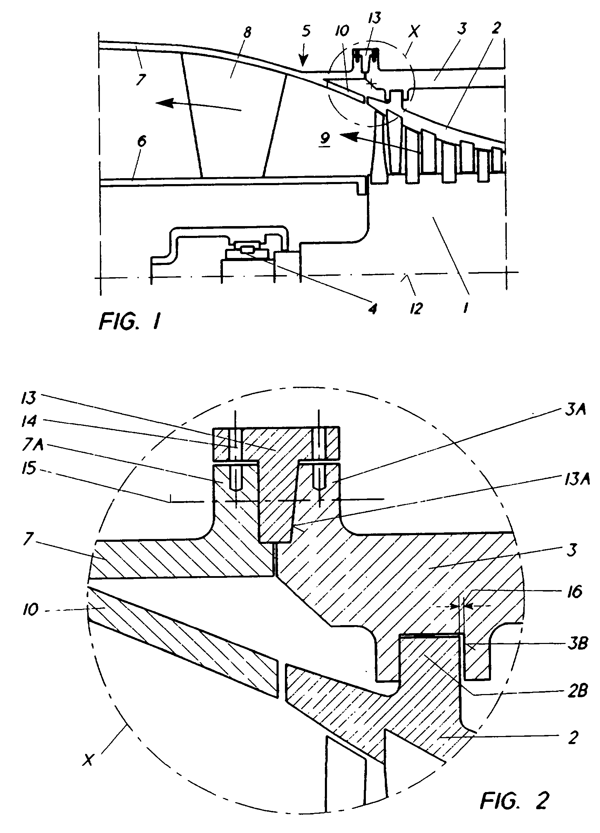

Die Gasturbine, von der in Fig. 1 nur oberhalb der Maschinenachse 12 die Abgasseite und die vier letzten, axialdurchströmten Stufen dargestellt sind, besteht im wesentlichen aus dem mit Laufschaufeln beschaufelten Rotor 1 und dem mit Leitschaufeln bestückten Schaufelträger 2. Der Schaufelträger 2 ist über Vorsprünge 2B in entsprechenden Aufnahmen 3B im Turbinengehäuse 3 eingehängt. An das Turbinengehäuse 3 ist das Abgasgehäuse 5 angeflanscht, welches im wesentlichen aus einem nabenseitigen, ringförmigen Innenteil 6 und einem ringförmigen Aussenteil 7 besteht, welche den Diffusor 9 begrenzen. Beide Elemente 6 und 7 können Halbschalen mit axialer Trennebene oder einteilige Topfgehäuse sein. Sie sind miteinander verbunden durch mehrere angeschweisste radiale Strömungsrippen 8, die gleichmässig verteilt über den Umfang angeordnet sind. Der ringförmige Aussenteil 7 ist turbinenseitig mit einer ringförmigen Dichtleiste 10 versehen, welche bündig ist mit der zylinderseitigen Kontur des durchströmten Turbinenkanals. Im Hohlraum innerhalb des Innenteils 6 ist die austrittsseitige Lagerung der Turbomaschine angeordnet, wobei der Rotor 1 in einem Traglager 4 einliegt.

Das Turbinengehäuse 3 und der Schaufelträger 2 sind mit einer in der Maschinenachse 12 liegenden, nicht dargestellten, horizontalen Trennebene versehen. Darin sind die in der Regel mit Flanschen versehenen oberen und unteren Hälften des Turbinengehäuses und des Schaufelträgers miteinander verschraubt.

Das Aussenteil 7 des Abgasgehäuses ist turbinenseitig mit einen Ringflansch 7A versehen. Dieser ist mit einem Ringflansch 3A des Turbinengehäuses 3 gasdicht verschraubt. Zwischen den beiden Ringflanschen ist ein zweiteiliger, ebenfalls mit horizontaler Trennebene versehener Trennring 13 eingelegt. Sein Querschnitt ist T-förmig, wobei sein horizontaler Teil die beiden Ringflansche 3A und 7A überdeckt. Die turbinenseitige Stirnfläche 13A des vertikalen Ringteiles ist konisch ausgebildet mit einem Winkel, der nicht grösser als 8° beträgt. Die mit der konischen Fläche 13A kooperierende Fläche des Ringflansches 3A ist mit einer entsprechenden Konizität versehen. Dies verschafft der Einrichtung Selbsthemmung. Wenn die Flanschverschraubung, die in Fig. 2 lediglich anhand ihrer Mittellinie 15 angedeutet ist, festgezogen wird, kann die Ringhälfte radial nicht nach aussen ausweichen.

Sollen nun beispielsweise die oberen Hälften des Turbinengehäuses und des Schaufelträgers hinsichtlich einer Schaufelinspektion abgedeckt werden, so muss nach dem Lösen der Flanschverschraubung auch nur die obere Hälfte des Trennringes 13 demontiert werden. Nach Entfernen dieses Halbringes kann das Turbinengehäuse 3 axial geringfügig nach rechts verschoben werden. Hierzu ist ein einseitiges geringes axiales Spiel 16 zwischen dem Vorsprung 2B und der Aufnahme 3B vorgesehen. Die Schaufelträgereinhängung 2B, 3B wird dadurch entlastet und die oberen Hälften der Elemente 3 und 2 können radial abgehoben werden.

Aus dem Angeführten ergibt sich, dass der Zugang zum Turbineninnern nunmehr möglich ist, ohne dass das Abgasgehäuse 5 demontiert werden muss. Dies führt zu einer beträchtlichen Zeitersparnis anlässlich von Revisionen.

Das Abgasgehäuse 5 besteht in der Regel aus einer geschweissten Blechkonstruktion, die aus den eingangs genannten Gründen zu Deformationen neigen kann. Ein solchermassen deformiertes Abgasgehäuse kann beim Zusammenbau mit dem Turbinengehäuse Schwierigkeiten bereiten. Um dem abzuhelfen, sind die Querbalken des Trennringes 13 mit radialen Verschraubungen versehen (von denen in Fig. 2 nur die Schraubenlöcher 14 dargestellt sind). Die Verschraubungen greifen in die Ringflansche 3A und 7A ein. Mit diesen Schrauben kann beim Zusammenbau ein deformiertes Abgasgehäuse in seine ursprüngliche Lage gezwungen werden.

### Bezugszeichenliste

- 1: Rotor
- 2: Schaufelträger
- 2B: Vorsprung
- 3: Turbinengehäuse
- 3A: Ringflansch
- 3B: Aufnahme
- 4: Traglager
- 5: Abgasgehäuse
- 6: Innenteil
- 7: Aussenteil
- 7A: Ringflansch
- 8: Strömungsrippen
- 9: Diffusor
- 10: Dichtleiste
- 12: Maschinenachse
- 13: Trennring
- 13A: konische Stirnfläche
- 14: radiale Verschraubung
- 15: Mittellinie der Flanschverschraubung
- 16: axiales Spiel

## Patentansprüche

1. Gasturbine mit einem in einem Turbinengehäuse (3) koaxial eingehängten Schaufelträger (2) für die Leitschaufeln, wobei sowohl das Turbinengehäuse als auch der Schaufelträger mit einer horizontalen Trennebene versehen sind, in welcher ihre jeweils oberen und unteren Hälften miteinander verschraubt sind, und wobei sich stromabwärts der Austrittslaufschaufeln ein Abgasgehäuse (5) anschliesst, dessen Begrenzungswände im wesentlichen aus einem nabenseitigen ringförmigen Innenteil (6) und einem ringförmigen Aussenteil (7) bestehen, welche einen Diffusor (9) begrenzen, und wobei das Aussenteil (7) über einen Ringflansch (7A) mit einem Ringflansch (3A) des Turbinengehäuses (3) gasdicht verbunden ist,
dadurch gekennzeichnet,
dass zwischen den Ringflanschen (3A, 7A) ein zweiteiliger Trennring (13) mit mindestens einer konisch verlaufenden Stirnfläche (13A) angeordnet ist.

2. Gasturbine nach Anspruch 1, dadurch gekennzeichnet, dass der Winkel der konisch verlaufenden Stirnfläche (13A) selbsthemmend ausgebildet ist.

## Claims

1. Gas turbine having a blade carrier (2) for the guide blades which is suspended coaxially in a turbine casing (3), in which both the turbine casing and the blade carrier are provided with a horizontal junction plane in which their respective top and bottom halves are bolted together, and in which downstream of the outlet moving blades is an adjoining exhaust gas casing (5), the bounding walls of which consist essentially of an annular inner part (6) on the hub side and an annular outer part (7), said parts bounding a diffuser (9), and in which the outer part (7) is gastightly connected by means of an annular flange (7A) to an annular flange (3A) of the turbine casing (3), characterized in that between the annular flanges (3A, 7A) a two-part separating ring (13) having at least one conically extending face (13A) is disposed.

2. Gas turbine according to Claim 1, characterized in that the angle of the conically extending face (13A) has a self-locking effect.

## Revendications

1. Turbine à gaz avec un support d'aubes (2) pour les aubes directrices, fixé coaxialement dans un carter de turbine (3), dans laquelle tant le carter de turbine que le support d'aubes sont pourvus d'un plan de séparation horizontal, dans lequel leurs moitiés supérieures et inférieures respectives sont vissées ensemble, et après laquelle est placé, en aval des aubes mobiles de sortie, un carter d'échappement (5), dont les parois de délimitation sont constituées essentiellement d'une partie intérieure annulaire (6) du côté du moyeu et d'une partie extérieure annulaire (7), qui délimitent un diffuseur (9), et dans laquelle la partie extérieure (7) est reliée de manière étanche aux gaz, par l'intermédiaire d'une bride annulaire (7A), à une bride annulaire (3A) du carter de turbine (3), caractérisée en ce qu'un anneau de séparation (13) en deux parties est disposé, avec au moins une face frontale (13A) s'étendant de manière conique, entre les brides annulaires (3A, 7A).

2. Turbine à gaz selon la revendication 1, caractérisée en ce que l'angle de la face frontale (13A) s'étendant de manière conique est conçu de manière auto-bloquante.
